# EUROPEAN PATENT SPECIFICATION

(11) **EP 1 482 198 B1**
(45) Date of publication and mention of the grant of the patent: **23.01.2008**
(21) Application number: 04012561.9
(22) Date of filing: 27.05.2004
(51) Int. Cl.: F16D 55/228

(54) **Structure for attaching a caliper body of a vehicular disk brake**
Struktur zur Befestigung des Sattels einer Fahrzeug-Scheibenbremse
Structure de fixation d'un étrier de frein à disque pour véhicules

(30) Priority: 28.05.2003 JP 2003150239
(43) Date of publication of application: 01.12.2004
(73) Proprietor: NISSIN KOGYO CO., LTD., Ueda-shi, Nagano-ken (JP)
(72) Inventor: Hatakoshi, Genichi, Tomi-shi Nagano 389-0514 (JP)
(74) Representative: HOFFMANN EITLE

(56) References cited:
- US-B1- 6 336 526
- PATENT ABSTRACTS OF JAPAN vol. 2000, no. 04, 31 August 2000 (2000-08-31) -& JP 2000 018291 A (SUMITOMO ELECTRIC IND LTD), 18 January 2000 (2000-01-18)
- PATENT ABSTRACTS OF JAPAN vol. 2003, no. 07, 3 July 2003 (2003-07-03) -& JP 2003 065369 A (TOKICO LTD), 5 March 2003 (2003-03-05)

## Description

### BACKGROUND OF THE INVENTION

### Field of the Invention

The present invention relates to a structure for attaching a caliper body of a disk brake used in various vehicles, such as motorcycles or automobiles, to a vehicle body. More particularly, the present invention relates to a structure for attaching a caliper body of a radial mount type in which the caliper body is attached to a vehicle body by using an attaching bolt in a direction perpendicular to a disk axis.

### Background Art

Conventionally, a vehicular disk brake has a structure in which a pair of fixed-to-vehicle bosses are formed at the disk-leading side and the disk-trailing side of a caliper body, in which a pair of caliper-fixing bosses each of which has an abutting surface that faces an abutting surface of the fixed-to-vehicle boss are formed on a bracket, in which a bolt insertion hole that passes through the abutting surface and that is bored in a direction perpendicular to the disk axis is formed in the fixed-to-vehicle boss, and in which a female threaded hole that is bored in the abutting surface and that is coaxial with the bolt insertion hole is formed in the caliper-fixing boss. The caliper body is attached to the bracket by inserting the attaching bolt from the bolt insertion hole and by tightening a male thread at the front end of the attaching bolt into the threaded hole so that the abutting surface of the fixed-to-vehicle boss can come into close, tight contact with the abutting surface of the caliper-fixing boss.

This radial mount type caliper body has the possibility that braking performance will noticeably decrease if the caliper body is attached in a state of being inclined with respect to the disk axis when attached to the bracket. Therefore, there is a need to attach the caliper body to the bracket while being positioned in the disk radial direction and in the disk circumferential direction with high accuracy. Therefore, a projection having a bolt insertion hole is formed on either of the abutting surfaces of the fixed-to-vehicle boss formed on the caliper body and the caliper-fixing boss formed on the bracket, and a recess to which the projection can be inserted and that has a bolt insertion hole formed on the other abutting surface. The caliper body is positioned with respect to the bracket by bringing the top surface of the projection into contact with the bottom surface of the recess (for example, JP-A-2003-65369, (pp. 3-6, FIG. 3)).

However, in the aforementioned structure, since the top surface of the projection formed on the abutting surface of either the fixed-to-vehicle boss or the caliper-fixing boss is brought into contact with the bottom surface of the recess formed on the other abutting surface, positioning can be performed in the disk radial direction when the caliper body is attached to the bracket, however, there is a case in which a gap is created between the base end of the projection and the top end of the caliper-fixing boss because of manufacturing errors or the like, for example, as shown in FIG. 3 of JP-A-2003-65369 mentioned above. Therefore, it is difficult to perform positioning in the disk circumferential direction when the caliper body is attached.

Additionally, since this gap part has a bolt insertion hole in its interior and becomes thinner than the other parts, there is a fear that strength will decrease and that the caliper body might shake in the disk circumferential direction because of this gap when braked. The fixed-to-vehicle boss and the caliper-fixing boss can be prevented from shaking in the disk radial direction by the attaching bolt that is inserted and tightened in the direction perpendicular to the disk axis when braked, however, the bosses easily shake in the disk circumferential direction. Therefore, a structure for attaching a caliper body has been required which is capable of effectively preventing the shaking in the disk circumferential direction.

Japanese patent application publication no. 2000018291 discloses a caliper, in which a clearance for absorbing the displacement of the pitches of the holes of a bolt hole and a mount bolt, exists therebetween. By the structure that both surfaces at the rotating-in and rotating-out side of a disc are located at a side close to (or far from) a disc rotor with respect to the mount bolt, the rotation of the caliper by the braking torque is generated on one of the surfaces as a fulcrum, so that the caliper rotating quantity can be reduced in comparison with a conventional product. A joint surface of the caliper and a supporting member includes a surface vertical to a disc shaft, and the rotation of the caliper caused by the clearance between the bolt hole and the mount bolt is stopped by the restricting action by this surface, so that the impairing the braking performance, the partial abrasion of a pad, and the increase of the creak caused by the rotation of the caliper can be prevented.

### SUMMARY OF THE INVENTION

It is therefore an object of the present invention to provide a structure for attaching a caliper body of a vehicular disk brake that is capable of preventing the caliper body from shaking in the disk circumferential direction with a simple structure, that is capable of attaching the caliper body to the bracket with high accuracy, and that is capable of effectively preventing the caliper body from shaking in the disk circumferential direction when braked so as to always maintain a stable braking force.

To attain the object, the invention according to claim 1 provides a structure for attaching a caliper body of a vehicular disk brake, comprising: a caliper body having a piston for pressing a friction pad against a side face of a disk rotor; and a bracket for supporting the caliper body on a vehicle body; wherein the caliper body includes a pair of fixed-to-vehicle bosses formed at a disk-leading side and at a disk-trailing side, each of the pair of fixed-to-vehicle bosses having a first abutting surface; the bracket includes a pair of caliper-fixing bosses each of which has a second abutting surface that faces the first abutting surface; each of the pair of fixed-to-vehicle bosses includes a bolt insertion hole which passes through the first abutting surface and which is bored in a direction perpendicular to a disk axis; each of the pair of caliper-fixing bosses has a female threaded hole which is opened in the second abutting surface and which is coaxial with the bolt insertion hole; the first abutting surface and the second abutting surface being arranged to be brought into contact with each other by fastening an attaching bolt inserted from the bolt insertion hole into the female threaded hole, so that the caliper body is attached to the bracket; a recess is formed around an opening of the bolt insertion hole of the first abutting surface or around an opening of the female threaded hole of the second abutting surface; a projection to be fitted to the recess is formed around the female threaded hole of the second abutting hole or the bolt insertion hole of the first abutting surface; and the projection is brought into close contact with the recess in a direction crossing an axial direction of the attaching bolt when the projection is fitted to the recess; characterised in that the length of the projection is shorter than the depth of the recess.

Preferably, an outer peripheral wall of the projection and an inner peripheral wall of the recess are formed so that the projection and the recess come into close contact with each other when the projection is fitted to the recess.

Preferably, a diameter of the outer peripheral wall and a diameter of the inner peripheral wall are set so that the projection and the recess come into close contact with each other when the projection is fitted to the recess.

Preferably, the recess and the projection have cross sections in the axial direction of the attaching bolt so as to substantially coincide with each other.

### BRIEF DESCRIPTION OF THE DRAWINGS

The present invention may be more readily described with reference to the accompanying drawings:

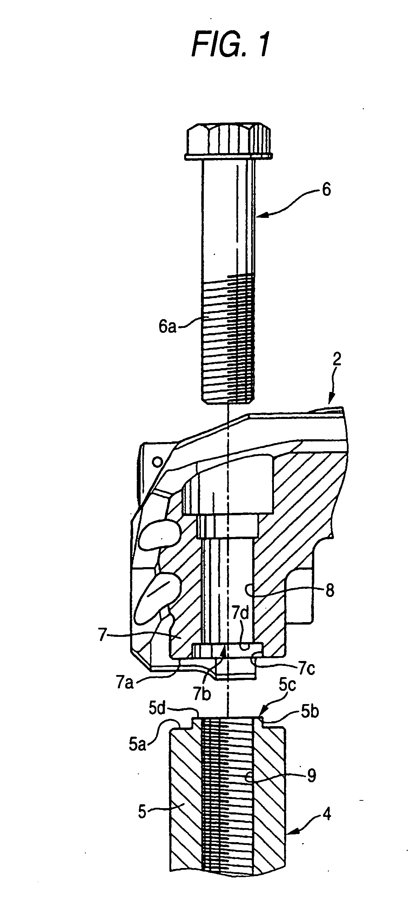

FIG. 1 is an explanatory drawing of a main part of a caliper body attaching structure, showing an embodiment of the present invention.

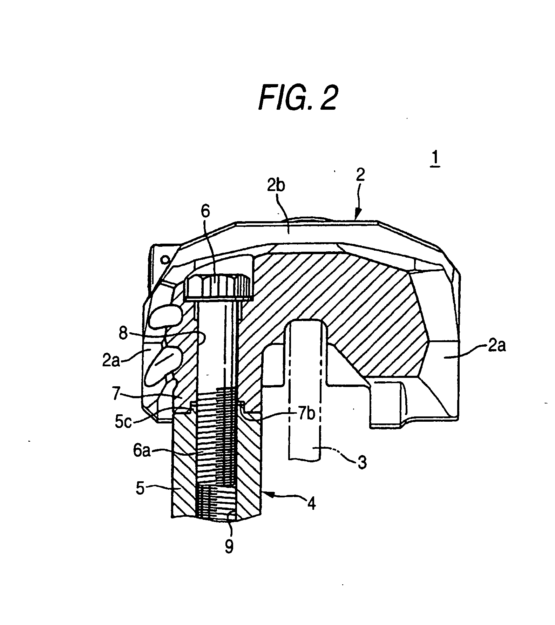

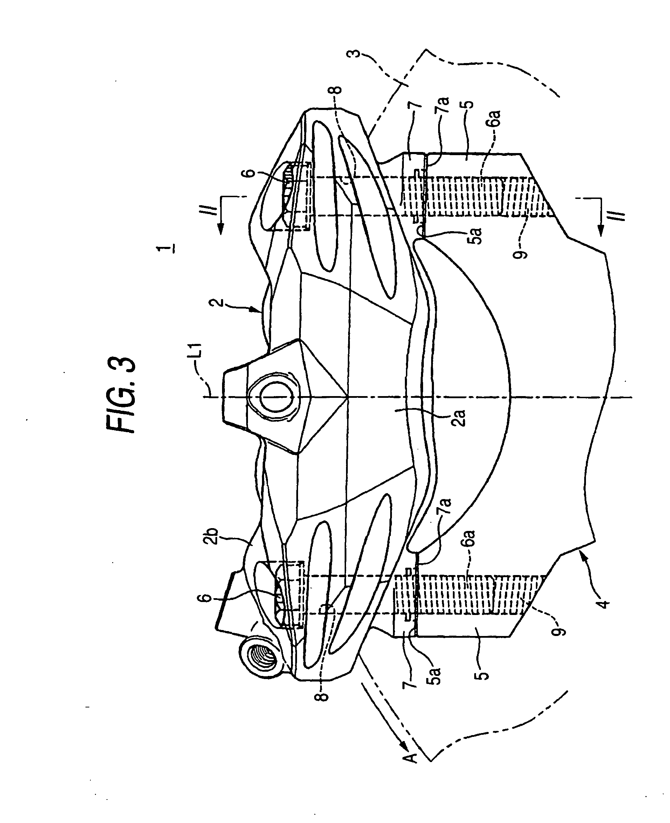

FIG. 2 is a sectional view along line II-II of FIG. 3.
FIG. 3 is a front view of a diskbrake showing one embodiment of the present invention.

### DETAILED DESCRIPTION OF THE PREFERRED EMBODIMENTS

With reference to the attached drawings, a description will be given of an embodiment in which the present invention is applied to a motorcycle. A caliper body 2 used in a disk brake 1 is attached to caliper-fixing bosses 5 and 5 formed on a bracket 4 contiguous to a front fork (not shown) by use of attaching bolts 6 and 6 astride a disk rotor 3 that is supported on the lower end of the front fork and that rotates together with a wheel (not shown) in a direction of arrow "A."

The caliper body 2 has a pair of operational portions 2a and 2a disposed so as to face each other at both sides, respectively, of the disk rotor 3 and a bridge portion 2b that connects the operational portions 2a and 2a together astride the outer periphery of the disk rotor 3. The operational portions 2a and 2a and the bridge portion 2b are formed integrally with the caliper body 2. Each of the operational portions 2a and 2a has a cylinder hole that can contain a piston by which a friction pad is pressed against a side face of the disk rotor 3. The caliper body 2 has fixed-to-vehicle bosses 7 and 7 that are fixed to a vehicle body and that are formed on the vehicle-body-side operational portion 2a that is disposed on one side of the disk rotor 3. The fixed-to-body bosses 7 and 7 are fixed to the caliper-fixing bosses 5 and 5, respectively, by use of the attaching bolts 6 and 6.

The fixed-to-vehicle bosses 7 and 7 of the caliper body 2 are formed by thickening a disk-leading side (i.e., side where the disk enters the caliper) and a disk-trailing side (i.e., side where the disk exits the caliper) of the operational portion 2a on the side of the disk rotor in parallel with a disk radial direction line L1 connecting a rotational center of the disk rotor 3 and a pad-pressing center of the caliper body 2 together. The fixed-to-vehicle bosses 7 and 7 have bolt insertion holes 8 and 8, respectively, that are slightly larger in diameter than the shaft diameter of the attaching bolt 6 and that are bored in parallel with the disk radial direction line L1 perpendicular to the axis of the disk. Cylindrical recesses 7b and 7b are formed around the bolt insertion holes 8 and 8 on abutting surfaces 7a and 7a of the fixed-to-vehicle bosses 7 and 7 that face the caliper-fixing bosses 5 and 5, respectively. The bolt insertion holes 8 and 8 are opened at the centers of the recesses 7b and 7b, respectively, so as to cause the center of each recess 7b to coincide with the center axis of each bolt insertion hole 8.

The caliper-fixing bosses 5 and 5 on the side of the bracket 4 are protruded from the bracket 4 so as to face the fixed-to-vehicle bosses 7 and 7, respectively. Female threaded holes 9 and 9 parallel to the disk radial direction line L1 perpendicular to the axis of the disk are bored with the same pitch as the bolt insertion holes 8 and 8. Projections 5c and 5c are formed at positions corresponding to the recesses 7b and 7b around the female threaded holes 9 and 9 on the abutting surfaces 5a and 5a of the caliper-fixing bosses 5 and 5 that face the fixed-to-vehicle bosses 7 and 7. The projections 5c and 5c are formed so that the center of each projection 5c coincides with the center axis of each female threaded hole 9. The diameter of an outer peripheral wall 5b of the projection 5c is slightly smaller than the diameter of an inner peripheral wall 7c of the recess 7b. The length of the outer peripheral wall 5b of the projection 5c is shorter than the length of the inner peripheral wall 7c of the recess 7b.

In the caliper body 2, the abutting surfaces 7a and 7a of the fixed-to-vehicle bosses 7 and 7 are butted against the abutting surfaces 5a and 5a of the caliper-fixing bosses 5 and 5, thereafter the projections 5c and 5c formed on the abutting surfaces 5a and 5a are fitted to the recesses 7b and 7b formed on the abutting surfaces 7a and 7a, and the inner peripheral walls 7c and 7c of the recesses 7b and 7b are brought into close contact with the outer peripheral walls 5b and 5b of the projections 5c and 5c over all the periphery. Thus, bolt insertion holes 8 and 8 and the female threaded holes 9 and 9 are both positionally adjusted, and shaft parts of the attaching bolts 6 and 6 are inserted from the outside of the bolt insertion holes 8 and 8, respectively, and male threads 6a and 6a at the front end side of the attaching bolts 6 and 6 are screwed into the female threadedholes 9 and 9, respectively. Thereby, the caliper-fixing boss 5 and the fixed-to-vehicle boss 7 are connected together while bringing the abutting surfaces 5a, 5a, 7a, and 7a into close, tight contact with each other. On the other hand, a slight gap is created between bottom surfaces 7d and 7d of the recesses 7b and 7b and tip surfaces 5d and 5d of the projections 5c and 5c.

As described above, in this embodiment, since the inner peripheral wall 7c of the recess 7b formed on the fixed-to-vehicle boss 7 is brought into contact with the outer peripheral wall 5b of the projection 5c formed on the caliper-fixing boss 5 over all the periphery, the caliper body 2 can be positioned with respect to the bracket 4, and the fixed-to-vehicle boss 7 and the caliper-fixing boss 5 can be attached with high accuracy without shaking in the circumferential direction of the disk. Additionally, since the outer peripheral wall 5b of the projection 5c is formed shorter than the length of the inner peripheral wall 7c of the recess 7b, no gap is created between the abutting surface 7a of the fixed-to-vehicle boss 7 and the abutting surface 5a of the caliper-fixing boss 5 when the fixed-to-vehicle boss 7 and the caliper-fixing boss 5 are connected together, even if a slight manufacturing error exists in the projection 5c or in the recess 7b. Therefore, the abutting surface 5a and the abutting surface 7a can be brought into tight and close contact with each other when the attaching bolt 6 is tightened, and the fixed-to-vehicle boss 7 and the caliper-fixing boss 5 can be connected together reliably and tightly, and the attaching rigidity of the caliper body 2 can be kept high.

Additionally, since the recess 7b is formed so that the center of the recess 7b coincides with the center axis of the bolt insertion hole 8, and since the projection 5c is formed so that the center of the projection 5c coincides with the center axis of the female threaded hole 9, the bolt insertion hole 8 and the female threaded hole 9 can be automatically disposed on the same axis when the projection 5c is fitted to the recess 7b. Therefore, the attaching bolt 6 can be easily tightened with high accuracy.

Since the outer peripheral wall 5b of the projection 5c is in close contact with the inner peripheral wall 7c of the recess 7b, and since the abutting surfaces 5a and 7a are in close contact with each other, the caliper body 2 can be prevented from shaking in the circumferential direction of the disk when braked. Unlike a conventional device, since a part where the fixed-to-vehicle boss 7 is butted against the caliper-fixing boss 5 is not thin, the attaching rigidity of the caliper body can be kept high, and a stable braking force can be provided.

The present invention is not limited to the aforementioned embodiment in which the abutting surface on the side of the fixed-to-vehicle boss has the recess and in which the abutting surface of the caliper-fixing boss has the projection. The abutting surface of the caliper-fixing boss may have a recess, and the abutting surface on the side of the fixed-to-vehicle boss may have a projection. Additionally, the recess and the projection are not limited to being cylindrical. If the projection can be fitted to the recess, and if the inner peripheral wall of the recess can be brought into contact with the outer peripheral wall of the projection, any shape can be employed.

Additionally, without being limited to the aforementioned embodiment in which the structure is used in the front fork, the caliper body attaching structure of the present invention can be used in a swing arm. Additionally, the present invention can be widely applied to vehicles having four or more wheels as well as bar-handle vehicles including motorcycles.

As described above, according to a first aspect of the present invention, a simple structure can effectively prevent the caliper body from shaking in the circumferential direction of the disk when the caliper body is attached to the bracket, and attaching accuracy can be improved. Additionally, the caliper body can be effectively prevented from shaking in the circumferential direction of the disk when braked, and the attaching rigidity of the caliper body can be kept high. Therefore, a stable braking force can be always provided.

According to a second aspect of the present invention, since the abutting surface of the fixed-to-vehicle boss can be reliably brought into close contact with the abutting surface of the caliper-fixingboss, the attaching accuracy of the caliper body can be reliably improved, and the caliper body can be prevented from jouncing when braked, and the attaching rigidity of the caliper body can be more effectively raised.

## Claims

1. A structure for attaching a caliper body (2) of a vehicular disk brake (1), comprising:
a caliper body having a piston for pressing a friction pad against a side face of a disk rotor (3); and
a bracket (4) for supporting the caliper body on a vehicle body;
wherein the caliper body includes a pair of fixed-to-vehicle bosses (7, 7) formed at a disk-leading side and at a disk-trailing side, each of the pair of fixed-to-vehicle bosses having a first abutting surface (7a, 7a);
the bracket includes a pair of caliper-fixing bosses (5, 5) each of which has a second abutting surface (5a, 5a) that faces the first abutting surface;
each of the pair of fixed-to-vehicle bosses includes a bolt insertion hole (8, 8) which passes through the first abutting surface and which is bored in a direction perpendicular to a disk axis;
each of the pair of caliper-fixing bosses has a female threaded hole (9, 9) which is opened in the second abutting surface and which is coaxial with the bolt insertion hole;
the first abutting surface and the second abutting surface being arranged to be brought into contact with each other by fastening an attaching bolt (6, 6) inserted from the bolt insertion hole into the female threaded hole, so that the caliper body is attached to the bracket;
a recess (7b) is formed around an opening of the bolt insertion hole of the first abutting surface or around an opening of the female threaded hole of the second abutting surface;
a projection (5c) to be fitted to the recess is formed around the female threaded hole of the second abutting hole or the bolt insertion hole of the first abutting surface; and
the projection is brought into close contact with the recess in a direction crossing an axial direction of the attaching bolt when the projection is fitted to the recess ;
**characterised in that** the length of the projection is shorter than the depth of the recess.

2. The structure for attaching a caliper body of a vehicular disk brake as claimed in claim 1;
an outer peripheral wall (5b) of the projection and an inner peripheral wall (7c) of the recess are formed so that the projection and the recess come into close contact with each other when the projection is fitted to the recess.

3. The structure for attaching a caliper body of a vehicular disk brake as claimed in claim 2,
a diameter of the outer peripheral wall and a diameter of the inner peripheral wall are set so that the projection and the recess come into close contact with each other when the projection is fitted to the recess.

4. The structure for attaching a caliper body of a vehicular disk brake as claimed in claim 1;
wherein the recess and the projection have cross sections in the axial direction of the attaching bolt so as to substantially coincide with each other.

## Patentansprüche

1. Struktur zum Anbringen eines Sattelkörpers (2) einer Fahrzeugscheibenbremse (1), umfassend:
einen Sattelkörper, der einen Kolben zum Anpressen eines Bremsklotzes gegen eine Seitenfläche einer Drehscheibe (3) hat; und
eine Auflage (4) zum Abstützen des Sattelkörpers auf dem Fahrzeugkörper;
in der der Sattelkörper zwei am Fahrzeug befestigten Vorsprünge (7, 7) beinhaltet, die an einer Einlaufseite und an einer Auslaufseite ausgebildet sind, wobei beide Fahrzeugbefestigungsvorsprünge (7, 7) eine erste anstoßende Oberfläche (7a, 7a) haben;
die Auflage beinhaltet zwei Sattelbefestigungsvorsprünge (5, 5) von denen jede eine zweite anstoßende Oberfläche (5a, 5a) hat, die zur ersten Oberfläche gerichtet ist;
jede der zwei Fahrzeugbefestigungsvorsprünge beinhaltet ein Bolzeneinsatzloch, welches durch die erste anstoßende Oberfläche hindurchgeht und die in einer zur Scheibenachse senkrechten Richtung gebohrt ist;
jede der zwei Sattelbefestigungsvorsprünge hat ein weibliches Gewindeloch (9, 9), welches in die zweite anstoßende Oberfläche eingebracht ist und das zum Bolzeineinsatzloch koaxial ist;
die erste anstoßende Oberfläche und die zweite anstoßende Oberfläche sind so angeordnet, dass sie miteinander durch Befestigen und Anbringen eines Anbringbolzens (6, 6), der von dem Bolzeneinsatzloch in das weibliche Gewindeloch eingesetzt wird, in Kontakt gebracht werden, so dass der Sattelkörper an der Auflage befestigt ist;
eine Aussparung (7b) ist um eine Öffnung des Bolzeneinsatzlochs der ersten anstoßenden Oberfläche oder um eine Öffnung um das weibliche Gewindeloch der zweiten anstoßenden Oberfläche ausgebildet;
eine Auskragung (5c), die in die Aussparung eingepasst werden soll, ist um das weibliche Gewindeloch der zweiten anstoßenden Oberfläche oder um das Bolzeneinsatzloch der ersten anstoßenden Oberfläche ausgebildet; und
die Auskragung wird in einer quer zur axialen Richtung des Anbringbolzens liegenden Richtung in engen Kontakt mit der Aussparung gebracht, wenn die Auskragung in die Aussparung eingepasst wird;
**dadurch gekennzeichnet, dass** die Länge der Auskragung kürzer als die Tiefe der Aussparung ist.

2. Struktur zum Anbringen eines Sattelkörpers einer Fahrzeugscheibenbremse nach Anspruch 1;
eine äußere Umfangswand (5b) der Auskragung und eine innere Umfangswand (7c) der Aussparung sind so ausgebildet, dass die Auskragung und die Aussparung in engen Kontakt miteinander gelangen, wenn die Auskragung in die Aussparung eingepasst wird.

3. Struktur zum Anbringen eines Sattelkörpers einer Fahrzeugscheibenbremse nach Anspruch 2;
ein Durchmesser der äußeren Umfangswand und ein Durchmesser der inneren Umfangswand werden so gesetzt, dass die Auskragung und die Aussparung in engen Kontakt miteinander gelangen, wenn die Auskragung in die Aussparung eingepasst wird.

4. Struktur zum Anbringen eines Sattelkörpers einer Fahrzeugscheibenbremse nach Anspruch 1;
bei der die Aussparung und die Auskragung in axialer Richtung des Anbringbolzens einen Querschnitte haben, die im Wesentlichen miteinander übereinstimmen.

## Revendications

1. Structure pour fixer un corps d'étrier (2) d'un frein à disque de véhicule (1) comprenant :
un corps d'étrier ayant un piston pour presser un patin de frottement contre une face latérale d'un rotor de disque (3) ; et
un support (4) pour supporter le corps d'étrier sur une carrosserie de véhicule ;
dans lequel le corps d'étrier comprend une paire de bossages fixés sur le véhicule (7, 7) formés en un côté avant du disque et en un côté arrière du disque, chacun de la paire de bossages fixés sur le véhicule ayant une première surface de butée (7a, 7a) ;
le support comprend une paire de bossages de fixation d'étrier (5, 5) chacun ayant une seconde surface de butée (5a, 5a) qui fait face à la première surface de butée ;
chacun de la paire de bossages fixés sur le véhicule comprend un trou d'insertion de boulon (8, 8) qui passe à travers la première surface de butée et qui est alésé dans une direction perpendiculaire à un axe de disque ;
chacun de la paire de bossages de fixation d'étrier a un trou fileté femelle (9, 9) qui est ouvert dans la seconde surface de butée et qui est coaxiale avec le trou d'insertion de boulon ;
la première surface de butée et la seconde surface de butée étant agencées pour être amenées en contact ensemble en fixant un boulon de fixation (6, 6) inséré depuis le trou d'insertion de boulon dans le trou fileté femelle, de telle manière que le corps d'étrier est fixé sur le support ;
un évidement (7b) est formé autour d'une ouverture du trou d'insertion de boulon de la première surface de butée ou autour d'une ouverture du trou fileté femelle de la seconde surface de butée ;
une saillie (5c) destinée à être montée dans l'évidement est formée autour du trou fileté femelle du second trou de butée ou du trou d'insertion de boulon de la première surface de butée ; et
la saillie est amenée en contact étroit avec l'évidement dans une direction croisant une direction axiale du boulon de fixation quand la saillie est montée dans l'évidement ;
**caractérisée en ce que** la longueur de la saillie est plus courte que la profondeur de l'évidement.

2. Structure pour fixer un corps d'étrier d'un frein à disque de véhicule selon la revendication 1 ;
une paroi périphérique extérieure (5b) de la saillie et une paroi périphérique intérieure (7c) de l'évidement étant formées de telle manière que la saillie et l'évidement viennent en contact étroit ensemble quand la saillie est montée dans l'évidement.

3. Structure pour fixer un corps d'étrier d'un frein à disque de véhicule selon la revendication 2 ;
un diamètre de la paroi périphérique extérieure et un diamètre de la paroi périphérique intérieure étant réglés de telle manière que la saillie et l'évidement viennent en contact étroit ensemble quand la saillie est montée dans l'évidemment.

4. Structure pour fixer un corps d'étrier d'un frein à disque de véhicule selon la revendication 1 ;
dans lequel l'évidement et la saillie ont des sections transversales dans la direction axiale du boulon de fixation de façon à coïncider sensiblement ensemble.
